# FASCICULE DE BREVET EUROPEEN

(11) **EP 2 489 995 B1**
(45) Date de publication et mention de la délivrance du brevet: **28.12.2016**
(21) Numéro de dépôt: 12154581.8
(22) Date de dépôt: 08.02.2012
(51) Int. Cl.: G01F 23/24, G01F 25/00, F17C 13/02

(54) **Détecteur de présence d'un liquide.**
Präsenzmelder einer Flüssigkeit
Detector of the presence of a liquid.

(30) Priorité: 17.02.2011 FR 1151311
(43) Date de publication de la demande: 22.08.2012
(73) Titulaire: Electricité de France, 75008 Paris (FR)
(72) Inventeur: Langry, Pierre, 95220 Herblay (FR)
(74) Mandataire: Cabinet Plasseraud

(56) Documents cités:
- EP-A1- 0 566 888
- DE-U1- 29 615 453
- FR-A1- 2 730 309

## Description

L'invention concerne la détection de présence d'un liquide dans un réservoir de stockage et en particulier le test de ce détecteur.

Le détecteur est notamment adapté pour permettre la détection d'un niveau haut de liquide dans un réservoir, en particulier un réservoir cryogénique, c'est-à-dire un réservoir de stockage contenant un liquide à basse température (typiquement inférieure à -50°C).

Les réservoirs de stockage de liquides cryogéniques comportent en général une double enveloppe. Le débordement de la cuve interne est un scénario aux conséquences très graves, contre lequel il faut se protéger et qui nécessite avant tout une détection très fiable. En effet, le déversement de liquide dans l'espace annulaire d'isolation du réservoir cryogénique génère, par la vaporisation du produit mis au contact de parties plus chaudes, une montée en pression de l'enveloppe externe pouvant conduire à des détériorations du réservoir et à un accident majeur.

Pour améliorer la fiabilité, on installe en général plusieurs types de détecteurs indépendants les uns des autres, mais on reste tributaire de la fiabilité individuelle des détecteurs. Chaque détecteur utilisé doit avoir une fiabilité appropriée, en général imposée par des normes. Pour un détecteur fonctionnant en continu, le fait qu'il détecte quelque chose et la précision de la détection peuvent suffire à se convaincre de la fiabilité. Pour un détecteur sensé détecter un phénomène isolé, tel que la présence d'un liquide à un endroit donné ou le franchissement d'un niveau haut, il faut réaliser un test.

Les détecteurs de l'état de la technique comprennent notamment des jauges flottantes asservies, que l'on teste en forçant la remontée manuellement, des radars, pour lesquels on peut simuler une occultation du faisceau, des capacitances, qui ne peuvent être testées in situ pour les raisons citées plus haut, ou encore des flotteurs, qu'on peut soulever à la main.

Or, dans les réservoirs de stockage de liquide, aucun dispositif de détection de niveau de l'art antérieur ne peut être testé dans les conditions réelles d'exploitation, sans que le niveau physique de liquide ne soit volontairement élevé jusqu'au seuil de détection. Dans l'hypothèse où la détection est destinée à protéger le réservoir contre l'accident décrit précédemment, élever le niveau de liquide ne peut se faire que par un remplissage. Il vient ainsi que, pour tester le dispositif d'alerte ou de protection, il faut créer l'événement initiateur du phénomène redouté. Si la détection ne fonctionne pas, les conséquences peuvent être graves.

Des exemples de détecteurs de liquide sont divulgués dans les documents FR 2 730 309 A1, EP 0 566 888 A1 et DE 296 15 453 U1.

La présente invention a pour but de remédier à tout ou partie des inconvénients mentionnés ci-dessus, c'est-à-dire en particulier de fournir un détecteur de présence d'un liquide qui puisse être testé in situ de manière réaliste, sans avoir à provoquer un événement déterminant la détection et qui, s'il n'est pas correctement détecté, peut avoir des conséquences graves.

La solution de l'invention porte sur un détecteur de présence d'un liquide selon la revendication 1.

Le liquide à tester peut être de toute nature. En particulier, il peut être un gaz liquéfié à une température inférieure à -50°C. Par exemple, il peut s'agir de gaz naturel liquéfié (GNL, ou LNG en anglais). Il peut aussi s'agir d'un autre gaz industriel liquéfié, par exemple de l'azote ou de l'oxygène.

L'enveloppe entoure la sonde de façon à ce que du liquide puisse être retenu autour de cette sonde. L'enveloppe comporte au moins une ouverture permettant la détection du liquide qui, arrivant au niveau de cette ouverture, pénètre dans l'enveloppe jusqu'à la sonde, pour que celle-ci réagisse comme s'il n'y avait pas d'enveloppe. Sans cette ouverture, l'enveloppe pourrait faire obstacle à la détection de présence de liquide.

L'enveloppe présente aussi une entrée pour l'admission d'un liquide test. C'est un liquide susceptible de faire réagir la sonde au même titre que le liquide dont on veut tester la présence. Le liquide test peut, de manière avantageuse pour la représentativité du test et pour exclure toute contamination, être de même nature que le liquide dont on veut détecter la présence. Cette entrée pour l'admission du liquide test permet la mise en contact volontaire de la sonde avec le liquide test.

L'enveloppe comprend aussi une sortie pour la l'évacuation du liquide test. En effet, après le test, il faut pouvoir remettre la sonde en conditions normales de fonctionnement, c'est-à-dire sans liquide autour d'elle.

Selon un mode particulier, la sortie du liquide de test fonctionne automatiquement. Par exemple, il s'agit d'un ou plusieurs orifices situés dans l'enveloppe à un niveau destiné à être sous la sonde lorsque le détecteur est en place. Ainsi le liquide test peut s'évacuer naturellement par gravité de manière à ce que la sonde ne soit plus en situation de détection. Ces orifices ne doivent pas être trop grands, de sorte que le liquide test ne s'évacue pas tout de suite. En effet, l'entrée de liquide test doit permettre de simuler une détection, même si l'évacuation de liquide test commence dès son entrée.

A l'issue de l'évacuation du liquide test, une certaine quantité de liquide test peut rester dans l'enveloppe, du moment que sa présence n'entraîne pas de détection.

Selon un mode particulier, l'ouverture pour recevoir du liquide et la sortie pour évacuer le liquide test peuvent être confondues (par exemple il s'agit d'un même orifice), ou partiellement confondues (au moins un orifice ayant les deux fonctions).

L'enveloppe et ses entrées/sorties sont configurées de préférence pour que l'entrée de liquide test simule de manière réaliste la présence de liquide à tester. L'enveloppe est de préférence proche de la sonde et présente une extension modérée, autorisant une détection dans des conditions réalistes sans qu'il soit besoin d'utiliser une grande quantité de liquide test.

On voit que le détecteur, grâce à la présence d'une enveloppe comportant des entrées/sorties spécifiques, peut être testé in situ dans des conditions réalistes, en mettant la sonde en présence de liquide test. Le test est réversible (à moins que la sonde soit elle-même irréversiblement changée après une détection) et peut être pratiqué aussi souvent qu'il est souhaitable.

Dans une réalisation, l'entrée pour l'admission du liquide test est conformée pour admettre un débit donné de liquide test, la sortie pour l'évacuation du liquide test comprenant un ou plusieurs orifices laissant collectivement échapper, par gravité, un débit de liquide test inférieur au débit donné. Ainsi la sortie de liquide test est automatique. Elle peut commencer dès son entrée. Le débit de sortie étant inférieur au débit d'entrée, un certain volume de liquide test va s'accumuler dans l'enveloppe. Dès que le débit d'entrée de liquide test s'annule, l'enveloppe commence à se vider. Selon un mode particulier, les orifices sont situés en partie basse de l'enveloppe du détecteur, en dessous de la sonde.

Dans une réalisation, la sonde est apte à détecter la présence de gaz naturel liquéfié et l'enveloppe est configurée pour pouvoir admettre et évacuer du gaz naturel liquéfié comme liquide test. Si la sonde est une sonde de détection de présence d'un liquide cryogénique tel que du GNL, l'enveloppe et ses entrées sorties sont configurées de manière à être compatibles avec de tels liquides, notamment en ce qui concerne les matériaux employés.

Selon l'invention, la sonde comprend un capteur de température pour détecter un changement de température dû à la présence de l'un au moins dudit liquide test et dudit liquide dans l'enveloppe au contact de la sonde. La détection d'un changement de température est un mode avantageux de détection, car un changement de température dû à la présence de liquide ou de liquide test se communique de manière automatique à la sonde par conduction thermique. En outre, les détecteurs de température sont bien adaptés aux liquides cryogéniques. Dans ce cas, la présence de liquide est révélée par une baisse de la température mesurée par la sonde.

Dans une réalisation, le capteur de température comprend une ou plusieurs thermistances. Elles peuvent être à fil de platine. Le détecteur peut être un thermocouple. Il peut y avoir redondance (plusieurs fils) pour fiabiliser la détection.

Selon l'invention, le détecteur comprend en outre un système de maintien en température comportant une entrée de gaz chaud régulée pour maintenir une température donnée au niveau du capteur de température en l'absence de liquide dans l'enveloppe. Ce système de maintien en température est tel que la sonde est maintenue à une température plus élevée que celle du liquide à détecter et du liquide test. Ce système permet d'éviter que les vapeurs froides d'un liquide cryogénique ne provoquent, par leur contact avec la sonde, un déclenchement intempestif ne correspondant pas à une présence de liquide, ou de liquide test, autour de la sonde. Le système de maintien en température ne doit en revanche pas s'opposer à une détection de liquide, ou de liquide test, lorsque ce liquide vient effectivement en contact avec la sonde. Il est à noter que ce système de maintien en température ne doit pas être confondu sur le plan sémantique avec la compensation en température qui peut exister pour des thermocouples. L'entrée de gaz chaud peut être régulée par une vanne, une valve de régulation, un robinet de régulation de débit ou autre, de manière à maintenir la température donnée au niveau du capteur de température.

Dans une réalisation, le système de maintien en température est configuré pour faire circuler un gaz autour de la sonde de manière à maintenir la température donnée. Le système permet un apport de chaleur pour s'opposer notamment à un refroidissement de la sonde dû à la présence de vapeurs froides. Ce mode de réalisation du système de compensation en température est à la fois efficace du point de vue du maintien en température et suffisamment « faible » pour ne pas s'opposer à la détection d'un changement de température dû à la présence de liquide. En effet, le liquide à détecter ayant une capacité calorifique bien supérieure au gaz apporté par le système de maintien en température, l'effet de ce système de maintien est rapidement dominé par la présence de liquide.

L'invention concerne aussi un réservoir pour stocker un liquide comprenant un détecteur tel que décrit ci-dessus. Le détecteur est peut être fixe ou mobile dans le réservoir. On peut notamment le fixer à un endroit où, de par sa position, il permet de détecter la présence du liquide stocké à un niveau donné dans le réservoir.

Dans une réalisation, le réservoir comprend en outre un toit, le détecteur étant localisé au niveau du toit pour détecter un niveau haut du liquide, au-delà d'un seuil défini par la position du détecteur dans le réservoir. Ainsi le détecteur a pour fonction de détecter un niveau haut, voire un niveau très haut selon sa position. Il reste testable *in situ* grâce notamment à son enveloppe.

Dans une réalisation, le réservoir comprend en outre une canalisation d'extraction du liquide et d'amenée d'au moins une partie du liquide jusqu'à l'entrée de l'enveloppe pour une utilisation en tant que liquide test. Grâce à cette canalisation, le liquide stocké dans le réservoir peut servir de liquide test pour le détecteur. Selon une variante, le liquide test peut provenir d'un autre réservoir. Cet autre réservoir peut être similaire au réservoir en question. Cet autre réservoir peut être d'un type différent, le liquide qu'il contient devant alors être apte à être utilisé comme liquide test pour la sonde du premier réservoir.

L'invention concerne enfin un procédé de test mettant en oeuvre un réservoir tel que décrit ci-dessus, caractérisé en ce qu'il comprend les étapes suivantes :
a) admission de liquide test dans l'enveloppe ;
b) constatation de la détection ou de la non-détection par la sonde de la présence du liquide test ; et
c) évacuation d'au moins une partie du liquide test admis dans l'enveloppe à l'étape a) pour que la sonde ne détecte plus la présence du liquide test.

Pour réaliser concrètement le test, on fait entrer du liquide test dans l'enveloppe par l'entrée prévue à cet effet. On peut ensuite constater que la sonde, mise en présence du liquide test, réagit ou non. Si elle réagit le test est concluant, sinon il faut examiner la cause de la non-détection, qui sera en général une panne de la sonde. Le liquide test doit être évacué après le test, suffisamment en tous cas pour faire cesser la détection.

Tous les modes particuliers évoqués ci-dessus pour un détecteur ou un réservoir selon l'invention s'appliquent mutatis mutandis au procédé de test selon l'invention.

Selon un mode de réalisation particulier, le réservoir étant en service, le liquide stocké est utilisé comme liquide test. Ceci présente l'avantage, déjà mentionné plus haut, de conférer une bonne représentativité au test.

D'autres particularités et avantages de la présente invention apparaîtront dans la description ci-après d'exemples de réalisation non limitatifs, en référence aux dessins annexés, dans lesquels :
- la figure 1 représente une vue de face en coupe d'un détecteur selon l'invention ;
- la figure 2 représente une coupe du détecteur de la figure 1 selon un plan II-II situé au niveau de la sonde de détection ;
- la figure 3 illustre de manière schématique un réservoir équipé d'un détecteur selon l'invention.

Pour des raisons de clarté, les dimensions des différents éléments représentés sur ces figures ne sont pas nécessairement en proportion avec leurs dimensions réelles. Sur les figures, des références identiques correspondent à des éléments identiques.

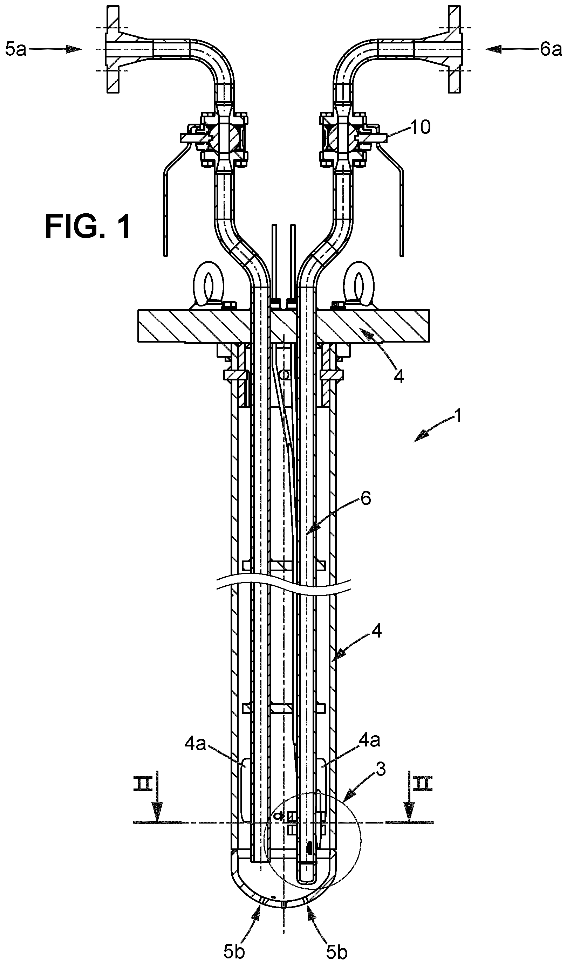

En figure 1, on a représenté un détecteur 1 selon l'invention. Il intègre une sonde 3 sensible à la présence de gaz naturel liquéfié (ou GNL) dans son voisinage. Cette sonde est en général destinée à être reliée à un système d'alarme ou d'action automatique. La sonde envisagée ici permet de détecter un changement de température dû au contact avec le GNL.

Le détecteur comprend une enveloppe 4 pourvue d'une bride pour la fixation du détecteur dans un réservoir. L'enveloppe comprend une partie de forme globalement tubulaire et entoure la sonde. Elle comprend des ouïes 4a qui constituent des ouvertures pour recevoir du liquide dans l'enveloppe. Ainsi, un liquide qui viendrait à environner l'enveloppe, par exemple à la suite de la montée du niveau de ce liquide dans un réservoir, ne pourrait qu'entrer dans l'enveloppe et provoquer, si la sonde fonctionne, une détection.

L'enveloppe 4 comprend aussi une entrée 5a pour l'admission d'un liquide test, par exemple du gaz naturel liquéfié, susceptible de faire réagir la sonde. Cette entrée se présente dans l'exemple sous la forme d'une canalisation pourvue d'une vanne d'arrêt permettant de conduire le liquide test jusqu'en bas de l'enveloppe 4, au niveau de la sonde 3, l'arrivée de liquide test simulant l'arrivée de liquide à détecter sans qu'il soit besoin d'intervenir directement sur la sonde elle-même.

L'enveloppe 4 comprend en outre des orifices 5b situés en bas de l'enveloppe, dont la fonction est de permettre l'évacuation d'un liquide présent dans l'enveloppe, notamment le liquide test. L'entrée 5a et la sortie 5b coopèrent pour admettre une quantité de liquide test susceptible de faire réagir la sonde. Les orifices sont a priori assez petits, afin que le remplissage par l'entrée 5a ne soit pas vain, c'est-à-dire que l'enveloppe ne se vide pas aussi vite qu'elle se remplit.

L'enveloppe comprend encore un système 6 de maintien en température de la sonde en l'absence de liquide. Il s'agit dans l'exemple représenté d'une canalisation permettant d'amener un gaz chaud par rapport aux vapeurs de gaz naturel liquéfié, qui sont en fait du gaz naturel à une température comprise entre -165°C environ et l'ambiante. Selon un mode particulier, le gaz chaud est également inerte. Par exemple, ce gaz peut être de l'azote de qualité industrielle obtenu par séparation cryogénique. Selon un autre exemple, ce gaz est du gaz naturel, s'il est disponible. Ce gaz est introduit à une température proche de la température ambiante, c'est-à-dire très au-dessus de celle du GNL (environ -165°C).

Le système de maintien de la température représenté est une canalisation pourvue d'une entrée 6a et d'une vanne d'arrêt 10. L'entrée 6a permet de conduire le gaz chaud jusqu'à la sonde 3, avec pour effet de maintenir cette sonde à une température suffisante pour empêcher un refroidissement de la sonde par des vapeurs de GNL. La vanne d'arrêt 10 permet de réguler le gaz chaud de l'entrée 6a pour le maintien en température de la sonde 3. On comprendra que cet exemple est purement illustratif et que la vanne d'arrêt 10 peut se présenter sous la forme de système de régulation d'un flux de gaz dans une canalisation tels qu'une valve de régulation, un robinet de régulation de débit ou autre.

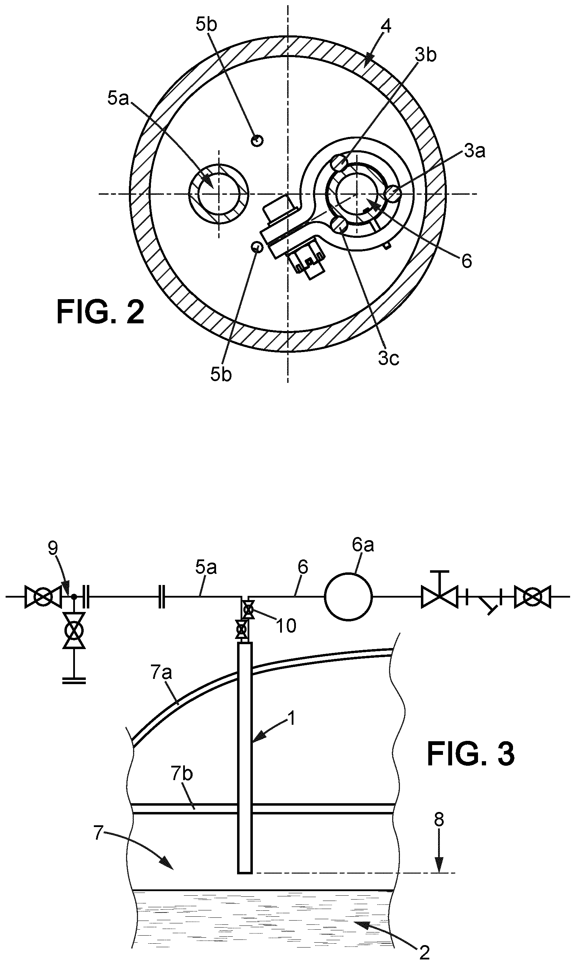

La figure 2 est une coupe selon un plan II-II orthogonal à l'axe vertical du détecteur de la figure 1. On y retrouve l'enveloppe 4 qui comprend un tube cylindrique à base circulaire, l'entrée 5a pour admettre du liquide test et le système 6 de maintien en température. On voit également les orifices 5b situés au fond de l'enveloppe 4.

La sonde est constituée ici de trois thermistances 3a, 3b et 3c placées contre le système de maintien en température. Elles sont par exemple à fil de platine. La partie sensible des thermistances se situe au niveau de la référence 3 de la figure 1, proche des ouïes 4a. Les thermistances peuvent être maintenues par un collier de serrage.

Plus précisément, les fils des thermistances possèdent une résistance de 100 ohms à 0°C, laquelle chute sensiblement en présence du froid. Un tel agencement est couramment employé à l'intérieur des réservoirs de GNL. Le retour d'expérience a montré que cet équipement est apte à détecter la présence de GNL. Les fils sont normalement reliés à un boîtier de jonction non-représenté.

La figure 3 illustre une portion d'un réservoir 7 de stockage de GNL 2. Le réservoir possède un toit 7a en forme de dôme et un second toit 7b pour l'isolation thermique entre le GNL à environ -165°C et les parties hautes du réservoir. Un détecteur 1 selon l'invention est fixé au dôme. L'enveloppe traverse le toit 7b, au moins dans sa partie basse. La sonde 3 se trouve à un niveau 8 à l'intérieur du réservoir sous le toit 7b. Le détecteur sert à détecter que le GNL franchit ce niveau 8.

Dans sa partie externe au réservoir, le détecteur est relié d'une part par l'entrée 5a à une source de liquide test et, d'autre part, par le système de maintien en température 6 à une source de gaz naturel ou d'azote à température ambiante. Cette source d'azote ou de gaz naturel comporte un débitmètre 6a. Le gaz naturel peut provenir d'un réseau de gaz non représenté et l'azote peut provenir de la vaporisation d'azote stocké sous forme liquide dans un réservoir non représenté. Dans l'exemple, la source de liquide test est une canalisation 9 de GNL pouvant être alimentée par le GNL du réservoir 7 lui-même. Notons que seule la partie haute de la canalisation est représentée. Selon une variante, la canalisation 9 pourrait être reliée à un autre réservoir que le réservoir 7, cet autre réservoir servant de source de liquide test.

Pour tester in situ le détecteur représenté aux figures 1, 2 et 3, on admet du liquide test dans l'enveloppe 4. Le liquide test arrive par l'entrée 5a et est conduit au niveau de la sonde 3. Celle-ci, si elle fonctionne correctement, envoie alors un signal de détection de présence de liquide. Si aucun signal n'est envoyé, alors :
- la sonde 3 ne fonctionne pas correctement,
- ou le test n'a pas été réalisé correctement.

Toutefois, cette deuxième alternative est limitée en probabilité notamment par le fait que le liquide test est évacué par les orifices 5b, de section réduite par rapport à l'entrée 5a. Cette évacuation se fait naturellement par gravité à un débit ainsi inférieur au débit d'admission de liquide test. Ensuite, la sonde est rapidement remise en conditions normales, c'est-à-dire sans liquide autour d'elle.

On notera que l'enveloppe, grâce aux ouvertures 4a, n'empêche pas le liquide contenu dans le réservoir, s'il montait jusqu'au niveau 8, de pénétrer dans l'enveloppe et d'être détecté par la sonde. L'enveloppe mise en oeuvre pour le test n'interfère donc pas avec le fonctionnement normal du détecteur.

La canalisation 6 permet d'apporter un gaz plus chaud que les vapeurs contenues dans le réservoir et ainsi d'éviter un déclenchement intempestif de la sonde. Il est préférable durant le test de laisser actif ce système de maintien en température. On peut donc tester qu'il ne gêne pas la détection de liquide. En effet, la détection repose sur le principe que l'effet du système de maintien en température de la sonde est dominé par l'effet thermique dû à la présence de liquide froid autour de la sonde.

Bien entendu, la présente invention ne se limite pas à la forme de réalisation décrite ci-avant à titre d'exemple ; elle s'applique à d'autres variantes.

Typiquement, l'agencement des orifices 5b, ou encore des ouvertures 4a, bien qu'avantageux, est présenté ci-avant à titre d'exemple non limitatif. Par exemple, on peut prévoir des orifices 5b de section plus ou moins grande selon la durée de séjour souhaitée du liquide dans l'enveloppe de la sonde.

## Revendications

1. Détecteur (1) de présence d'un liquide (2) comprenant une sonde (3) sensible à la présence du liquide à son contact, ainsi qu'une enveloppe (4) entourant la sonde comprenant :
a) une ouverture (4a) pour recevoir du liquide dans l'enveloppe, la mise en contact du liquide avec la sonde dans l'enveloppe provoquant la détection de présence de liquide ;
b) une entrée (5a) distincte de l'ouverture (4a) pour l'admission d'un liquide test dans l'enveloppe au contact de la sonde, la mise en contact du liquide test avec la sonde dans l'enveloppe provoquant la détection de présence du liquide test si la sonde fonctionne correctement et aucune détection dans le cas contraire ; et
c) une sortie (5b) pour l'évacuation d'au moins une partie du liquide test de l'enveloppe après la mise en contact du liquide test avec la sonde, l'évacuation étant suffisante pour que la sonde ne puisse plus détecter le liquide test restant dans l'enveloppe ;
le détecteur étant **caractérisé en ce que**
la sonde comprend un capteur de température (3) pour détecter un changement de température dû à la présence de l'un au moins dudit liquide test et dudit liquide dans l'enveloppe au contact de la sonde, le détecteur comprenant en outre un système de maintien en température (6) comportant une entrée de gaz chaud (6a) de température plus élevée que celle du liquide à détecter et du liquide test, régulée pour maintenir une température donnée au niveau du capteur de température en l'absence de liquide dans l'enveloppe.

2. Détecteur selon la revendication 1, dans lequel l'entrée pour l'admission du liquide test est conformée pour admettre un débit donné de liquide test, la sortie pour l'évacuation du liquide test comprenant un ou plusieurs orifices laissant collectivement échapper, par gravité, un débit de liquide test inférieur au débit donné.

3. Détecteur selon l'une quelconque des revendications 1 et 2, dans lequel la sonde est apte à détecter la présence de gaz naturel liquéfié et l'enveloppe est configurée pour pouvoir admettre et évacuer du gaz naturel liquéfié comme liquide test.

4. Détecteur selon la revendication 1, dans lequel le capteur de température (3) comprend une ou plusieurs thermistances (3a, 3b, 3c).

5. Détecteur selon la revendication 1, dans lequel le système de maintien en température est configuré pour faire circuler un gaz autour de la sonde de manière à maintenir la température donnée.

6. Réservoir (7) pour stocker un liquide (2) comprenant un détecteur (1) selon l'une quelconque des revendications précédentes.

7. Réservoir selon la revendication 6, comprenant en outre un toit (7a, 7b), le détecteur étant localisé au niveau du toit pour détecter un niveau haut du liquide, au-delà d'un seuil (8) défini par la position du détecteur dans le réservoir.

8. Réservoir selon l'une quelconque des revendications 6 et 7, comprenant en outre une canalisation d'extraction (9) du liquide contenu dans le réservoir (7) et d'amenée d'au moins une partie dudit liquide jusqu'à l'entrée de l'enveloppe pour une utilisation en tant que liquide test.

9. Procédé de test mettant en oeuvre un réservoir selon l'une quelconque des revendications 6 à 8, **caractérisé en ce qu'**il comprend les étapes suivantes :
a) admission de liquide test dans l'enveloppe ;
b) constatation de la détection ou de la non-détection par la sonde de la présence du liquide test ; et
c) évacuation d'au moins une partie du liquide test admis dans l'enveloppe à l'étape a) pour que la sonde ne détecte plus la présence du liquide test.

10. Procédé selon la revendication 9, dans lequel, le réservoir étant en service, le liquide stocké est utilisé comme liquide test.

## Patentansprüche

1. Detektor (1) für das Vorhandensein einer Flüssigkeit (2), umfassend eine Sonde (3), die bei Kontakt empfindlich für das Vorhandensein der Flüssigkeit ist, sowie ein die Sonde umgebendes Gehäuse (4), umfassend:
a) eine Öffnung (4a) für das Aufnehmen der Flüssigkeit im Gehäuse, wobei das Inkontaktbringen der Flüssigkeit mit der Sonde im Gehäuse führt die Erkennung eines Vorhandenseins von Flüssigkeit herbei;
b) eine Eintrittsöffnung (5a), die von der Öffnung (4a) verschieden ist, für den Einlass einer Prüfflüssigkeit in das Gehäuse mit Sondenkontakt, wobei das Inkontaktbringen der Prüfflüssigkeit mit der Sonde im Gehäuse führt die Erkennung eines Vorhandenseins der Prüfflüssigkeit herbei, wenn die Sonde richtig funktioniert, und führt keine Erkennung im gegenteiligen Fall herbei; und
c) eine Austrittsöffnung (5b) für die Ableitung wenigstens eines Teils der Prüfflüssigkeit aus dem Gehäuse nach dem Inkontaktbringen der Prüfflüssigkeit mit der Sonde, wobei die Ableitung dafür ausreichend ist, dass die Sonde die im Gehäuse verbleibende Prüfflüssigkeit nicht mehr erkennen kann;
wobei der Detektor **dadurch gekennzeichnet ist, dass** die Sonde einen Temperaturfühler (3) zum Erkennen einer Temperaturänderung aufgrund des Vorhandenseins mindestens einer von der Prüfflüssigkeit und der Flüssigkeit im Gehäuse mit Sondenkontakt umfasst,
der Detektor außerdem ein Temperaturhaltesystem (6) mit einer Eintrittsöffnung für warmes Gas (6a) einer höheren Temperatur als derjenigen der zu erkennenden Flüssigkeit und der Prüfflüssigkeit umfasst, die zum Halten einer bestimmten Temperatur am Temperaturfühler bei Abwesenheit einer Flüssigkeit im Gehäuse geregelt wird.

2. Detektor nach Anspruch 1, bei dem die Eintrittsöffnung für den Einlass der Prüfflüssigkeit ausgebildet ist, um eine bestimmte Durchflussmenge der Prüfflüssigkeit einzulassen, wobei die Austrittsöffnung für die Ableitung der Prüfflüssigkeit eine oder mehrere Löcher umfasst, die durch Schwerkraft gemeinsam eine Durchflussmenge der Prüfflüssigkeit, die geringer ist als die bestimmte Durchflussmenge, abfließen lassen.

3. Detektor nach einem der Ansprüche 1 und 2, bei dem die Sonde dazu geeignet ist, das Vorhandensein von Flüssigerdgas zu erkennen, und das Gehäuse ausgebildet ist, um Flüssigerdgas als Prüfflüssigkeit einlassen und ableiten zu können.

4. Detektor nach Anspruch 1, bei dem der Temperaturfühler (3) einen oder mehrere Thermistoren (3a, 3b, 3c) umfasst.

5. Detektor nach Anspruch 1, bei dem das Temperaturhaltesystem dafür ausgebildet ist, ein Gas so um die Sonde strömen zu lassen, dass die bestimmte Temperatur gehalten wird.

6. Behälter (7) zum Lagern einer Flüssigkeit (2), der einen Detektor (1) nach einem der vorhergehenden Ansprüche umfasst.

7. Behälter nach Anspruch 6, außerdem ein Dach (7a, 7b) umfassend, wobei sich der Detektor auf der Höhe des Dachs befindet, um einen hohen Flüssigkeitsstand jenseits eines Schwellenwerts (8), der durch die Position des Detektors im Behälter definiert ist, zu erkennen.

8. Behälter nach einem der Ansprüche 6 und 7, außerdem eine Leitung zur Förderung (9) der im Behälter (7) enthaltenen Flüssigkeit und eine Leitung für die Zufuhr mindestens eines Teils der Flüssigkeit bis zur Eintrittsöffnung des Gehäuses zur Nutzung als Prüfflüssigkeit umfassend.

9. Prüfverfahren, das einen Behälter nach einem der Ansprüche 6 bis 8 anwendet, **dadurch gekennzeichnet, dass** es folgende Schritte umfasst:
a) Einlassen von Prüfflüssigkeit in das Gehäuse;
b) Feststellen der Erkennung oder Nichterkennung eines Vorhandenseins der Prüfflüssigkeit durch die Sonde; und
c) Ableiten wenigstens eines Teils der in Schritt a) in das Gehäuse eingelassenen Prüfflüssigkeit, damit die Sonde das Vorhandensein der Prüfflüssigkeit nicht mehr erkennt.

10. Verfahren nach Anspruch 9, bei dem die gelagerte Flüssigkeit, wenn der Behälter in Betrieb ist, als Prüfflüssigkeit verwendet wird.

## Claims

1. Detector for detecting the presence of a liquid comprising a probe sensitive to the presence of the liquid on contact with it, and a casing surrounding the probe comprising:
a) an opening for receiving the liquid in the casing, the placing in contact of the liquid with the probe in the casing causing the presence of liquid to be detected;
b) an inlet distinct from the opening for the admission of a test liquid into the casing in contact with the probe, the placing of the test liquid in contact with the probe in the casing causing the presence of the test liquid to be detected if the probe operates correctly and causing no detection in the contrary case; and
c) an outlet for the discharge of at least a portion of the test liquid from the casing after the test liquid has been placed in contact with the probe, the discharge being sufficient for the probe to no longer detect the test liquid remaining in the casing,
**characterized in that** the probe comprises a temperature sensor for detecting a temperature change due to the presence of at least one of the said test liquid and the said liquid in the casing in contact with the probe,
the detector further comprising a temperature-maintenance system comprising an inlet for hot gas having a temperature higher than that of the liquid and the test liquid, regulated for maintaining a given temperature at the temperature sensor in the absence of liquid in the casing.

2. Detector according to Claim 1, in which the inlet for the admission of the test liquid is formed in order to admit a given flow rate of test liquid, the outlet for the discharge of the test liquid comprising one or more orifices collectively allowing the escape, by gravity, of a flow rate of test liquid that is less than the given flow rate.

3. Detector according to Claim 1, in which the probe is capable of detecting the presence of liquefied natural gas and the casing is configured to be able to admit and discharge liquefied natural gas as a test liquid.

4. Detector according to Claim 1, in which the temperature sensor comprises one or more thermistors.

5. Detector according to Claim 1, in which the temperature-maintenance system is configured to cause a gas to circulate around the probe so as to maintain the given temperature.

6. Reservoir for storing a liquid comprising a detector according to any one of the preceding claims.

7. Reservoir according to Claim 6, also comprising a roof, the detector being located on the roof in order to detect a high level of the liquid, beyond a threshold defined by the position of the detector in the reservoir.

8. Reservoir according to Claim 6 or 7, also comprising an extraction pipe for extracting the liquid contained in the reservoir and for carrying at least a portion of the said liquid to the inlet of the casing for use as a test liquid.

9. Test method using a reservoir according to any one of claims 6 to 8, comprising the following steps:
a) admission of test liquid into the casing;
b) noting the detection or the non-detection by the probe of the presence of the test liquid; and
c) discharge of at least a portion of the test liquid admitted into the casing in step a) so that the probe no longer detects the presence of the test liquid.

10. Method according to Claim 9, in which, the reservoir being in service, the stored liquid is used as a test liquid.
